# EUROPÄISCHE PATENTSCHRIFT

(11) **EP 2 867 055 B1**
(45) Veröffentlichungstag und Bekanntmachung des Hinweises auf die Patenterteilung: **05.08.2020**
(21) Anmeldenummer: 13730209.7
(22) Anmeldetag: 17.06.2013
(51) Int. Cl.: B60L 58/10, B60L 58/18, B60L 3/00

(54) **VERFAHREN ZUM BETREIBEN EINES ELEKTRISCHEN TRAKTIONSANTRIEBSSYSTEMS MIT BATTERIEDIREKTINVERTER UND ZUGEHÖRIGE STEUERUNGSVORRICHTUNG**
METHOD FOR OPERATING AN ELECTRIC TRACTION DRIVE SYSTEM WITH A BATTERY DIRECT INVERTER AND ASSOCIATED CONTROL APPARATUS
PROCÉDÉ DE FONCTIONNEMENT D'UN SYSTÈME DE TRACTION ÉLECTRIQUE COMPORTANT UN ONDULEUR DIRECT DE BATTERIE ET DISPOSITIF DE COMMANDE ASSOCIÉ

(30) Priorität: 27.06.2012 DE 102012210908
(43) Veröffentlichungstag der Anmeldung: 06.05.2015
(73) Patentinhaber: Robert Bosch GmbH, 70442 Stuttgart (DE); Samsung SDI Co., Ltd., Gyeonggi-do 449-577 (KR)
(72) Erfinder: FINK, Holger, 70567 Stuttgart (DE)
(74) Vertreter: Bee, Joachim
(86) Internationale Anmeldenummer: PCT/EP2013/062498
(87) Internationale Veröffentlichungsnummer: WO 2014/001117

(56) Entgegenhaltungen:
- DE-A1-102008 002 505
- DE-A1-102011 004 248

## Beschreibung

Die vorliegende Erfindung betrifft ein Verfahren zum Betreiben eines elektrischen Traktionsantriebssystems, das einen Elektromotor und eine Batterie mit mehreren Batteriesträngen umfasst, in denen jeweils mehrere Batteriemodule angeordnet sind, die jeweils bezüglich der Ausgangsterminals eines jeweiligen Batteriestrangs mit positiver Polung oder negativer Polung selektiv zugeschaltet oder in dem jeweiligen Batteriestrang überbrückt werden können, sodass jeder Batteriestrang eine einstellbare Ausgangsspannung liefert. Ferner betrifft die Erfindung eine zugehörige Vorrichtung zum Ansteuern eines Traktionsantriebssystems und ein entsprechendes Batteriesystem. Außerdem betrifft die Erfindung ein Fahrzeug mit dem Batteriesystem und/oder mit der erfindungsgemäßen Vorrichtung.

### Stand der Technik

Aus dem Stand der Technik sind Batterien bekannt, die in Hybrid- und Elektrofahrzeugen eingesetzt werden und die als Traktionsbatterien bezeichnet werden, da sie für die Speisung elektrischer Antriebe verwendet werden.

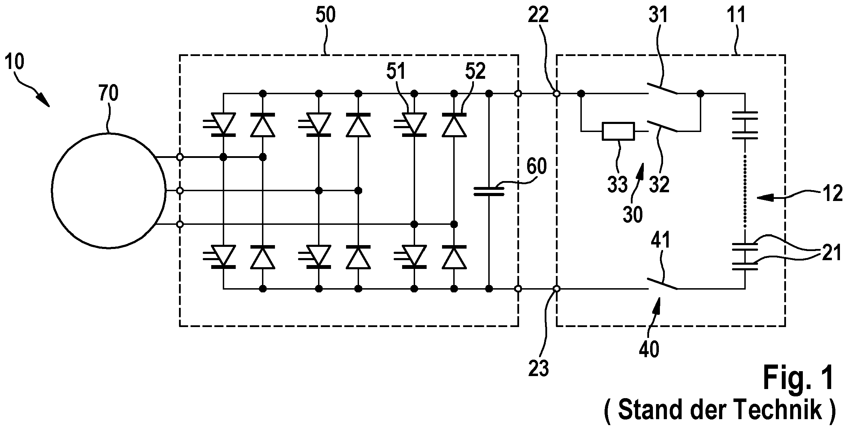

Das Prinzipschaltbild eines aus dem Stand der Technik bekannten elektrischen Traktionsantriebssystems 10, wie es beispielsweise in Elektro- und HybridFahrzeugen oder auch in stationären Anwendungen wie bei der Rotorblattverstellung von Windkraftanlagen zum Einsatz kommt, ist in der Figur 1 dargestellt. Eine Batterie (Traktionsbatterie) 11 ist an einen Gleichspannungszwischenkreis angeschlossen, welcher durch einen Kondensator 60 gepuffert wird. An den Gleichspannungszwischenkreis angeschlossen ist ferner ein Pulswechselrichter beziehungsweise Pulsumrichter 50, der über jeweils zwei schaltbare Halbleiterventile 51 und zwei Dioden 52 an drei Ausgängen gegeneinander phasenversetzte Sinusspannungen für den Betrieb eines Elektromotors 70 bereitstellt. Zur Vereinfachung der Darstellung sind in der Zeichnung nur ein Halbleiterventil und eine Diode mit Bezugszeichen versehen. Die Kapazität des Kondensators 60 ist hinreichend groß gewählt, um die Spannung im Gleichspannungszwischenkreis für eine Zeitdauer, in der eines der schaltbaren Halbleiterventile 51 durchgeschaltet wird, zu stabilisieren. In einer praktischen Anwendung wie einem Elektrofahrzeug erfordert dies eine hohe Kapazität im Bereich von mF.

Als Elektromotoren (Elektromaschinen) 70 werden in solchen Traktionsantrieben 10 üblicherweise Drehstrommotoren eingesetzt. Meist handelt es sich dabei um Asynchronmotoren, permanent geregelte Synchronmotoren oder fremderregte Synchronmotoren. Zur Speisung der Elektromaschine 70 werden üblicherweise Pulsumrichter 50 eingesetzt, die im Traktionsbereich bei Elektro- und Hybridfahrzeugen üblicherweise mit Halbleiterschaltern 51, die als Bipolartransistoren mit isolierten Gate-Elektroden (IGBT) ausgebildet sind, ausgeführt werden.

Die in der Figur 1 dargestellte Batterie 11 umfasst einen Batteriemodulstrang 12, in dem eine Vielzahl von Batteriezellen 21 in Serie sowie optional zusätzlich parallel zugeschaltet sind, um eine für eine jeweilige Anwendung gewünschte hohe Ausgangsspannung und Batteriekapazität zu erreichen, wobei zur Vereinfachung der Darstellung in der Zeichnung nur eine Batteriezelle mit einem Bezugszeichen versehen wurde. Zwischen dem Pluspol der Batteriezellen 21 und einem positiven Batterieterminal 22 ist eine Lade- und Trenneinrichtung 30 geschaltet. Optional kann zusätzlich zwischen dem Minuspol der Batteriezellen und einem negativen Batterieterminal 23 eine Trenneinrichtung 40 geschaltet werden.

Die Trenn- und Ladeeinrichtung 30 und die Trenneinrichtung 40 umfassen jeweils ein Schütz 31 beziehungsweise 41, welche dafür vorgesehen sind, die Batteriezellen 21 von den Batterieterminals 22, 23 abzutrennen, um die Batterieterminals 22, 23 spannungsfrei zu schalten. Aufgrund der hohen Gleichspannung der seriengeschalteten Batteriezellen 21 ist andernfalls erhebliches Gefährdungspotential für Wartungspersonal oder andere Personen gegeben. In der Lade- und Trenneinrichtung 30 ist zusätzlich ein Ladeschütz 32 mit einem zu dem Ladeschütz 32 in Serie geschalteten Ladewiderstand 33 vorgesehen. Der Ladewiderstand 33 begrenzt einen Ladestrom für den Kondensator 60, wenn die Batterie 11 an den Gleichspannungszwischenkreis angeschlossen wird. Hierzu wird zunächst das Schütz 31 offen gelassen und nur das Ladeschütz 32 geschlossen. Erreicht die Spannung am positiven Batterieterminal 22 die Spannung der Batteriezellen 21, kann das Schütz 31 geschlossen und gegebenenfalls das Ladeschütz 32 geöffnet werden. Die Schütze 31, 41 und das Ladeschütz 32 erhöhen die Kosten für eine Batterie 11 nicht unerheblich, da hohe Anforderungen an ihre Zuverlässigkeit und an die von ihnen zu führenden Ströme gestellt werden.

Tritt in der Traktionsbatterie eines solchen Traktionsantriebs ein technisches Problem auf, welches entweder direkt zu dem Ausfall einer Batteriezelle oder bei weiterem Betrieb der Batterie zu einem sicherheitsrelevanten unsicheren Zustand der Batterie führen kann, wird die Batterie von dem Batteriemanagementsystem in einen sicheren Zustand überführt. Dieser Zustand wird gemäß dem Stand der Technik bei Lithium-Ionen-Batteriesystemen hergestellt, indem die Batterie durch das Öffnen der Schütze der Lade- und Trenneinrichtung vom Gleichspannungszwischenkreis abgetrennt wird.

Das Führungssystem des Traktionsantriebs muss dann mit der Situation zurechtkommen, dass die Batterie nicht mehr als Energiespeicher zur Verfügung steht. Abhängig von dem Betriebszustand des Elektromotors wird durch das Führungssystem dabei im Wesentlichen nur noch erreicht, dass es zu keiner Zerstörung des Pulswechselrichters oder Inverters kommt. Eine Zerstörung des Inverters kann beispielsweise durch einen unzulässig starken Anstieg der Spannung des Gleichspannungszwischenkreises hervorgerufen werden. Das Führungssystem kann in der Folge keine Rücksicht mehr auf ein fahrdynamisch sinnvolles Verhalten des Traktionsantriebs nehmen beziehungsweise es kann ein fahrdynamisch sinnvolles Verhalten des Traktionsantriebs aufgrund der Abtrennung der Batterie theoretisch auch gar nicht mehr einstellen.

Als eine Konsequenz daraus gibt der Traktionsantrieb aus fahrdynamischer Sicht unerwünschte oder sogar unzulässige Drehmomente, insbesondere plötzlich auftretende, große negative Drehmomente, ab. Dies muss in dem Gesamtkonzept eines solchen Traktionsantriebs eines Fahrzeuges dann durch zusätzliche Maßnahmen, wie zum Beispiel durch einen mechanischen Freilauf, beherrscht werden. Diese Zusatzmaßnahmen sind aufwändig und extrem unerwünscht, da sie nur im Falle eines technischen Fehlers in der Batterie benötigt werden und daher üblicherweise nie zum Einsatz kommen.

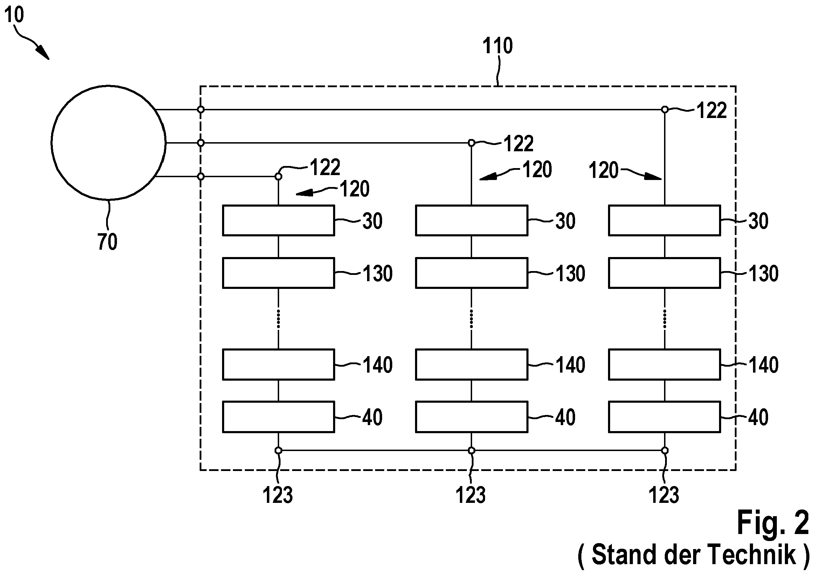

In der früheren Patentanmeldung der Anmelderin mit dem Aktenzeichen DE 10 010 027 864 A1 wurde ein mehrphasiges Batteriesystem mit einer Batterie mit stufig einstellbaren Ausgangsspannungen beschrieben. Das Blockschaltbild eines Antriebssystems (Traktionsantrieb) 10 mit einer solchen Batterie 110 ist in der Figur 2 dargestellt. Die Batterie 110 umfasst mehrere Batteriestränge 120, in denen jeweils mehrere Batteriemodule 130, 140 mit in Serie und/oder parallel geschalteten Batteriezellen angeordnet sind. Die Batteriemodule 130, 140 können über ihnen jeweils zugeordnete sogenannte Koppeleinheiten (nicht separat dargestellt) jeweils in einem zugehörigen Batteriestrang 120 in positiver oder negativer Orientierung seriell zugeschaltet oder überbrückt werden. Zwischen dem Pluspol eines obersten Batteriemoduls 130 und einem positiven Batteriestrangterminal 122 ist in jedem Batteriestrang 120 eine Lade- und Trenneinrichtung 30 geschaltet. Optional kann zusätzlich zwischen dem Minuspol eines untersten Batteriemoduls 140 und einem negativen Batteriestrangterminal 123 in jedem Batteriestrang 120 eine Trenneinrichtung 40 geschaltet werden. Insbesondere in dreiphasiger Ausführung werden Systeme mit derartigen Batterien 110 auch als Batteriedirektinverter (DINV) 110 bezeichnet. Wird ein Traktionsantrieb 10 mit Einsatz eines solchen Batteriedirektinverters realisiert, werden die in der Figur 1 dargestellte Traktionsbatterie 10 und der Pulswechselrichter (Inverter) 50 durch den Batteriedirektinverter 110 ersetzt.

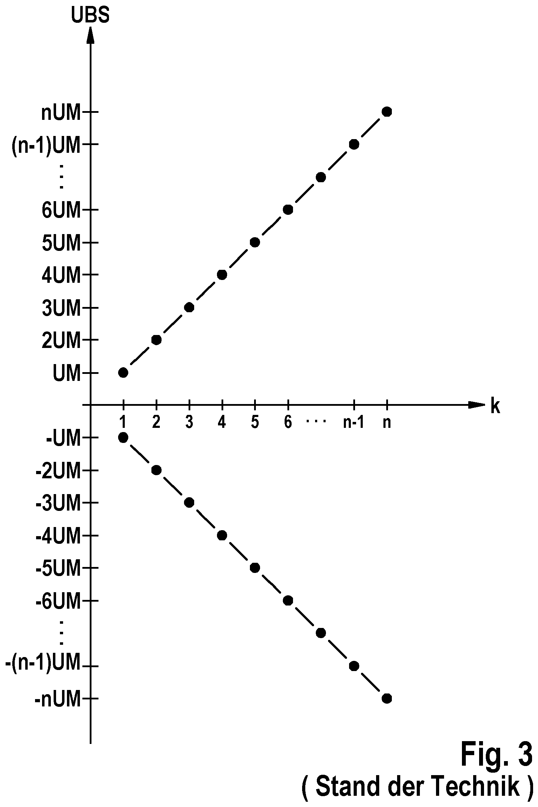

Der mögliche Verlauf der Ausgangsspannung UBS einer jeden Phase des in der Figur 2 dargestellten Batteriedirektinverters 110 ist in der Figur 3 dargestellt. Die dargestellte Ausgangsspannung UBS ist dabei die von einem Batteriestrang 120 erzeugte Spannung. Figur 3 zeigt die Abhängigkeit der Ausgangsspannung UBS eines Batteriestranges 120 von der Anzahl k der zu dem Batteriestrang 120 in positiver oder negativer Orientierung zugeschalteten Batteriemodule 130, 140. Die zu jedem Batteriestrang 120 zugeschalteten Batteriemodule 130, 140 weisen hierbei jeweils die gleiche Modulspannung UM auf. Die in der Abhängigkeit von der zugeschalteten Anzahl k von Batteriemodulen 130, 140 dargestellte Ausgangsspannung UBS des Batteriestranges 120 ist linear und folgt der Relation UBS = k·UM für Batteriemodule 130, 140, die in positiver Orientierung beziehungsweise positiver Polung zu dem zugehörigen Batteriestrang 120 zugeschaltet worden sind, oder der Relation UBS = - k·UM für Batteriemodule 130, 140, die in negativer Orientierung beziehungsweise negativer Polung zu dem zugehörigen Batteriestrang 120 zugeschaltet worden sind. Dabei gilt die Relation 1 < k < n und n ist die maximale Anzahl der Batteriemodule 130, 140, die zu dem Batteriestrang 120 zugeschaltet werden können. Die maximale Ausgangsspannung UBS des Batteriestranges 120 kann dann entsprechend den Wert n·UM annehmen. Die minimale Ausgangsspannung UBS des Batteriestranges 120 kann dann entsprechend den Wert - n·UM annehmen.

Die DE 10 2011 004 248 A1 offenbart eine Schaltungsanordnung mit einem Mehrstufenwandler, welcher Spannungsversorgungsklemmen zur Bereitstellung einer Ausgangswechselspannung umfasst. Ferner umfasst die Schaltungsanordnung wenigstens zwei Wandlerstufen.

Die DE 10 2008 002 505 A1 offenbart ein Verfahren zum Betrieb einer mindestens einen Elektromotor aufweisenden elektrischen Antriebsvorrichtung eines Kraftfahrzeugs. Es ist vorgesehen, dass ab einem Auftreten eines Fehlersignals ein von der elektrischen Antriebsvorrichtung erzeugtes Drehmoment vorgebbar gradientenbegrenzt verringert wird.

### Offenbarung der Erfindung

Erfindungsgemäß wird ein Verfahren zum Betreiben eines elektrischen Traktionsantriebssystems, das einen Elektromotor und eine Batterie mit mehreren Batteriesträngen umfasst, bereitgestellt. Die Batteriestränge weisen Batteriemodule auf, die jeweils mit den Ausgangsterminals eines jeweiligen Batteriestrangs positiver Polung oder negativer Polung selektiv zugeschaltet oder in dem jeweiligen Batteriestrang überbrückt werden können, sodass jeder Batteriestrang eine einstellbare Ausgangsspannung liefert. Die Batteriemodule werden im Betrieb auf eine ordnungsgemäße Funktion hin überwacht werden. Wenn dabei ein technischer Fehler zumindest eines zugeschalteten Batteriemoduls detektiert wird, dann wird dieses zumindest eine Batteriemodul überbrückt und das Traktionsantriebssystem wird in einen Übergangszustand überführt, in dem der Elektromotor derart von den verbleibenden zugeschalteten Batteriemodulen der Batteriestränge weiter versorgt und angesteuert wird, dass er kein Drehmoment erzeugt.

Erfindungsgemäß wird ferner eine zugehörige Vorrichtung zur Steuerung eines elektrischen Traktionsantriebssystems, das eine Batterie mit in positiver oder negativer Orientierung zuschaltbaren oder entkoppelbaren Batteriemodulen aufweist, bereitgestellt. Erfindungsgemäß ist die Vorrichtung dazu ausgebildet, die Batteriemodule im Betrieb auf eine ordnungsgemäße Funktion hin zu überwachen, und wenn bei der Überwachung ein technischer Fehler zumindest eines Batteriemoduls detektiert wird, das Traktionsantriebssystem (10) so anzusteuern, dass das Traktionsantriebssystem in einen Übergangszustand überführt wird, in dem der Elektromotor, während sich das zumindest eine als fehlerhaft detektierte Batteriemodul in einem überbrückten Zustand befindet, derart von den zugeschalteten Batteriemodulen des Batteriestrangs (120) weiter versorgt und gesteuert wird, dass er kein Drehmoment erzeugt.

Die Erfindung betrifft insbesondere Batterien, die mit einem Batteriedirektinverter (DINV) betrieben werden und an ihrem Ausgang direkt ein dreiphasiges Wechselspannungssystem bereitstellen können.

Insbesondere können bei Elektro- und Hybridfahrzeugen die Traktionsbatterien als Batteriedirektinverter ausgeführt sein. Die Ausgangsspannungen des Batteriedirektinverters können jeweils stufenförmig zwischen einer minimalen Ausgangsspannung und einer maximal möglichen Ausgangsspannung eingestellt werden. Die minimale Ausgangsspannung einer Phase beziehungsweise eines Batteriestranges wird dann erreicht, wenn alle Batteriemodule in dieser Phase mit negativer Orientierung, das heißt negativer Polung, über die ihnen zugeordneten Koppeleinheiten zugeschaltet sind. Die maximale Ausgangsspannung wird entsprechend dann erreicht, wenn alle Batteriemodule in dieser Phase mit positiver Orientierung beziehungsweise positiver Polung zugeschaltet sind.

Tritt in einem der Batteriemodule des Batteriedirektinverters ein technischer Fehler auf, wie beispielsweise ein plötzlicher unvorhergesehener Ausfall oder eine Fehlfunktion von mindestens einer der darin angeordneten Batteriezellen, wobei die Fehlfunktion mindestens bei einem weiteren Betrieb zu einem sicherheitsrelevanten Zustand des betroffenen Batteriemoduls führen kann, wird dieses Batteriemodul mittels der ihm zugordneten Koppeleinheit zunächst überbrückt. Dieses Batteriemodul steht somit der Batterie des Batteriedirektinverters nicht mehr für die Abgabe oder Aufnahme elektrischer Energie zur Verfügung. Die restlichen Batteriemodule können nach der Erkennung eines technischen Defektes in einem der Batteriemodule den Traktionsantrieb weiter speisen.

Die Erfindung sieht günstigerweise vor, dass beim Auftreten eines technischen Fehlers in der Batterie des Batteriedirektinverters der Traktionsantrieb definiert und zuverlässig in einen drehmomentfreien Zustand (Leerlauf) überführt wird. Dies ist aus fahrdynamischer Sicht eine erhebliche Verbesserung zu der aus dem Stand der Technik bekannten Situation und entspricht der heute bei Antrieben mit Verbrennungsmotoren auftretenden Situation, wenn der Fahrer in einer kritischen Fahrsituation auf die Kupplung tritt.

Die aus dem Stand der Technik bekannten Zusatzmaßnahmen bezüglich der Antriebsfunktion, wie beispielsweise die Durchführung von mechanischen Freiläufen, die nur beim Auftreten eines Fehlers der Batterie benötigt und verwendet werden, können dadurch entfallen. Das erfindungsgemäße Verfahren und die entsprechende Vorrichtung kommen ohne zusätzliche Hardwaremaßnahmen aus und können daher ohne entsprechende zusätzliche Kosten für die Herstellung der erfindungsgemäßen Antriebssysteme realisiert werden.

Bei einer besonderen Ausführungsform der Erfindung ist der Elektromotor als Drehstrommaschine ausgebildet, wobei zur Überführung des Antriebssystems in den drehmomentfreien Zustand die drehmomentbildende Stromkomponente des Ständerstromes des Elektromotors mittels einer feldorientierten Regelung innerhalb einer vorbestimmten Zeit auf Null eingeregelt wird.

Ferner kann insbesondere nachdem das Antriebssystem in dem drehmomentfreien Zustand überführt wurde eine Batteriediagnose durchgeführt werden, anhand der entschieden wird, ob der Traktionsantrieb mittels der Batterie mit dem ausgefallenen Batteriemodul weiter betrieben wird und/oder weitere sicherheitsrelevante Maßnahmen eingeleitet werden.

Anders ausgedrückt, der drehmomentfreie Zustand des Antriebs kann als Fehlerbetrieb genutzt werden oder als Übergangsbetrieb dienen, bis durch eine Batteriediagnose beziehungsweise durch eine Fehlerdiagnose entschieden werden kann, ob und wie die Traktionsbatterie ohne Sicherheitsrisiko weiter betrieben wird. Dabei kann der Antrieb beispielsweise mit einer geringeren Performance weiter betrieben wird.

Um beim Auftreten eines technischen Fehlers in der Batterie schnell in einen drehmomentfreien Betriebszustand übergehen zu können und dann mittels einer Batteriediagnose entscheiden zu können, ob die Batterie beispielsweise mit reduzierter Speicherkapazität und reduzierter Performance weiter betrieben werden kann, wird wie nachfolgend genauer beschrieben vorgegangen:
Erfindungsgemäß wird der Antrieb günstigerweise stets so betrieben, dass die Führung des Antriebs auch dann gewährleistet ist, wenn ein beliebiges Batteriemodul des Batteriedirektinverters schlagartig ausfällt. Diese Maßnahme kann Auswirkungen auf die zulässige Maximalspannung haben, welche die Drehstromantriebe an ihren Klemmen für die Aufrechterhaltung ihrer Führung benötigen. Ferner wird dadurch bestimmt, bei welchen Drehzahlen eine Asynchronmaschine in den sogenannten Feldschwächbetrieb gefahren wird und nicht mehr ihr maximal mögliches Drehmoment an die Welle abgibt. Tritt in einem Batteriemodul ein Fehlerfall auf, kann der Antrieb auch bei Überbrückung dieses fehlerhaften Batteriemoduls die zur kontrollierten Führung des Elektromotors erforderlichen Spannungsverhältnisse an den Klemmen der Maschine einstellen. Die Drehstrommaschine wird dann über eine sogenannte feldorientierte Führung, deren Verwendung bei Drehstromantrieben im Traktionsbereich aus dem Stand der Technik bekannt ist, so betrieben, dass der drehmomentbildende Strom schnellstmöglich auf null eingeregelt wird und die Maschine dann im Leerlauf betrieben wird. Im Gegensatz zur Änderung der feldbildenden Komponente kann die drehmomentbildende Komponente mit deutlich kleineren Zeitkonstanten geändert werden. Befindet sich der Antrieb im Leerlauf, kann mittels einer Diagnose des Zustands der Batterie entschieden werden, ob ein technisches Problem vorliegt, das nur ein Batteriemodul betrifft oder ob ein Problem vorliegt, das die gesamte Batterie betrifft.

Erfindungsgemäß kann, wenn der Betrieb des Traktionsantriebssystems mittels der Batterie mit zumindest einem überbrückten defekten Batteriemodul weiter aufrechterhalten wird, das Traktionsantriebssystem in einen Betriebszustand überführt wird, in dem der Elektromotor mit einer um den Spannungswert einer dem überbrückten defekten Batteriemodul entsprechenden Batteriemodulspannung reduzierten Batteriestrangspannung gespeist wird.

Andererseits können auch hinreichend viele weitere Batteriemodule als Ersatz für das zumindest eine überbrückte defekte Batteriemodul zugeschaltet werden. Bei einer solchen Vorgehensweise kann der Elektromotor mit einer unveränderten oder nur geringfügiger reduzierten Ausgangsspannung weiter versorgt werden.

Mit anderen Worten, es kann in Abhängigkeit von dem Ergebnis der durchgeführten Batteriediagnose entschieden werden, ob der Traktionsantrieb mit Ausschluss nur des einen, fehlerhaften Batteriemodul weiter betrieben wird oder weitere Maßnahmen zur Gewährleistung der Sicherheit, wie beispielsweise die Abschaltung weiterer Batteriemodule oder die Warnung des Fahrers, eingeleitet werden müssen.

Ausgehend von dem aktuellen Zustand der Batterie kann ferner auch der schlagartige Ausfall von zwei oder mehreren Batteriemodulen sicher beherrscht werden. Dies bedeutet letztlich nur eine entsprechend hohe Spannungsreserve beim Betrieb des Antriebs gegenüber der maximal zur Verfügung stehenden Spannung einzuhalten.

Bei einer besonders vorteilhaften Ausführungsform der Erfindung wird, wenn das Traktionsantriebssystem mittels der Batterie mit dem ausgefallenen und überbrückten Batteriemodul weiter gespeist wird und daraufhin ein weiteres Batteriemodul ausfällt, das Traktionsantriebssystem mittels eines entsprechend wiederholten Verfahrens weiter betrieben. Das bedeutet, dass das vorhin beschriebene erfindungsgemäße Verfahren weiterhin auch anwendbar ist, wenn die Batterie bereits ein fehlerhaftes Modul aufweist, die restliche Batterie aber weiterbetrieben wird. Dazu muss das Batteriemanagementsystem beziehungsweise das Führungssystem des Antriebs lediglich berücksichtigen, dass die zur Verfügung stehende Maximalspannung, die Speicherkapazität und die Performance der Batterie auf die Verhältnisse angepasst werden, die sich durch den Ausfall eines Batteriemoduls ergeben.

Mittels des erfindungsgemäßen Verfahrens und der entsprechenden Vorrichtung kann die Situation, in der mindestens ein beliebiges Batteriemodul ausfällt, sicher beherrscht werden. Dabei wird der Antrieb sicher in einen drehmomentfreien Zustand überführt.

Nach einem anderen Aspekt der Erfindung wird ein elektrisches Batteriesystem geschaffen, dass eine Batterie mit mehreren Batteriesträngen umfasst, in denen jeweils mehrere Batteriemodule angeordnet sind. Die Batteriemodule können jeweils bezüglich der Ausgangsterminals eines jeweiligen Batteriestrangs mit positiver Polung oder negativer Polung selektiv zugeschaltet oder in dem Batteriestrang überbrückt werden. Ferner ist das Batteriesystem mit der erfindungsgemäßen Steuerungsvorrichtung ausgestattet.

Erfindungsgemäß ist die Batterie insbesondere eine Lithium-Ionen-Batterie.

Ferner wird erfindungsgemäß ein Fahrzeug, das einen Elektromotor, sowie das Batteriesystem und/oder die erfindungsgemäße Vorrichtung aufweist, geschaffen, wobei das Batteriesystem beziehungsweise die Vorrichtung in einem Antriebsstrang des Fahrzeugs angeordnet sind.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 das Prinzipschaltbild eines aus dem Stand der Technik bekannten Traktionsantriebes mit einem Elektromotor, der mit einer Batterie mit einem aus mehreren Batteriezellen ausgebildeten Batteriestrang verbunden ist,
Figur 2 das Prinzipschaltbild eines aus dem Stand der Technik bekannten Traktionsantriebes mit einem Elektromotor, der mit einer Batterie mit drei jeweils aus mehreren Batteriemodulen mit jeweils mindestens einer Batteriezelle ausgebildeten Batteriesträngen verbunden ist, wobei die Batteriemodule zur Erzeugung einer einstellbaren Ausgangsspannung eines jeden Batteriestranges zu dem zugehörigen Batteriestrang in Serie zuschaltbar und überbrückbar ausgebildet sind,
Figur 3 einen möglichen Verlauf der Ausgangsspannung eines jeden Batteriestranges der in der Figur 2 dargestellten Batterie in Abhängigkeit von der Anzahl der zu dem entsprechenden Batteriestrang zugeschalteten Batteriemodule, und

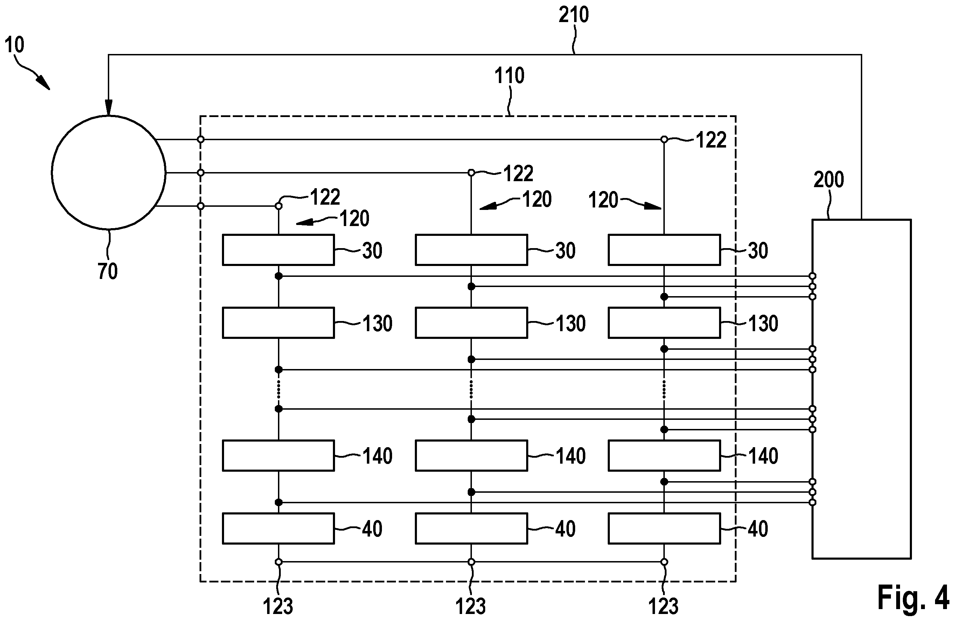

Figur 4 das Prinzipschaltbild eines Traktionsantriebes nach einer ersten Ausführungsform der Erfindung mit einem Elektromotor, der mit einer Batterie mit drei jeweils aus mehreren Batteriemodulen mit jeweils mindestens einer Batteriezelle ausgebildeten Batteriesträngen verbunden ist, wobei die Batteriemodule zu Erzeugung einer einstellbaren Ausgangsspannung eines jeden Batteriestranges zu dem zugehörigen Batteriestrang in Serie zuschaltbar und überbrückbar ausgebildet sind.

### Ausführungsform der Erfindung

In der Figur 4 ist das Prinzipschaltbild eines Traktionsantriebes 10 nach einer ersten Ausführungsform der Erfindung dargestellt.

Der Traktionsantrieb umfasst eine Batterie (Traktionsbatterie) 110 mit drei Batteriesträngen 120, die an Ihren drei Ausgängen gegeneinander phasenversetzte Sinusspannungen für den Betrieb des Elektromotors 70 bereitstellen.

Der Elektromotor 70 ist als Drehstrommotor ausgebildet.

Die Batteriestränge 120 der Batterie 110 sind jeweils aus mehreren Batteriemodulen 130, 140, die jeweils zu dem zugehörigen Batteriestrang 120 seriell zuschaltbar sind und jeweils in Serie und/oder parallel geschaltete Batteriezellen umfassen, ausgebildet.

Zur Vereinfachung der Darstellung wurden in der Figur 4 nur zwei Batteriemodule 130, 140 pro Batteriestrang 120 eingezeichnet. Diese Batteriemodule 130, 140 können über die ihnen jeweils zugeordneten Koppeleinheiten (nicht separat dargestellt) in dem zugehörigen Batteriestrang 120 in positiver oder negativer Orientierung zugeschaltet oder überbrückt werden. Zwischen dem Pluspol eines obersten Batteriemoduls 130 und einem positiven Batteriestrangterminal 122 ist in jedem Batteriestrang 120 eine Lade- und Trenneinrichtung 30, die wie die Lade- und Trenneinrichtung aus der Figur 1 ausgebildet ist, geschaltet. Optional kann zusätzlich zwischen dem Minuspol eines untersten Batteriemoduls 140 und einem negativen Batteriestrangterminal 123 in jedem Batteriestrang 120 eine Trenneinrichtung 40, die wie die Trenneinrichtung aus der Figur 1 ausgebildet ist, geschaltet werden. Systeme mit derartigen Batterien 110 werden auch als Batteriedirektinverter (DICO) 110 bezeichnet.

Der Traktionsantrieb 110 umfasst ferner die Steuerungsvorrichtung 200, die jeweils mit den Anschlüssen (nicht gekennzeichnet) der Batteriemodule 130, 140 eines jeden Batteriestranges 120 elektrisch verbunden ist. Die Steuerungsvorrichtung 200 ist dazu ausgebildet, die Spannungen der einzelnen Batteriemodule 130, 140 eines jeden Batteriestranges 120 zu messen. Ferner ist die Steuerungsvorrichtung 200 auch dazu vorgesehen, dass wenn während des Betriebs des Antriebssystems 10 zumindest eines der zu einem Batteriestrang 120 zugeschalteten Batteriemodule 130, 140 ausfällt, den Elektromotor 70 mittels der Batterie 110 mit dem ausgefallenen und überbrückten Batteriemodul 130, 140 weiter zu speisen und über die Steuerleitung 210 derartig weiter zu betreiben, dass das Antriebsystem 10 in einen drehmomentfreien Zustand überführt wird. Insbesondere wird zur Überführung des Antriebssystems 10 in den drehmomentfreien Zustand die drehmomentbildende Stromkomponente des Ständerstromes des als Drehstrommaschine ausgebildeten Elektromotors 70 mittels einer feldorientierten Regelung unverzüglich auf null eingeregelt. Die Steuerungsvorrichtung 200 ist ferner dazu ausgebildet, nachdem das Antriebssystem 10 in den drehmomentfreien Zustand überführt wurde, eine Batteriediagnose durchzuführen. Anhand der Batteriediagnose wird dann entschieden, ob der Traktionsantrieb 10 zwar mittels der Batterie 110 jedoch mindestens einem ausgefallenen Batteriemodul weiter betrieben wird und/oder ob weitere sicherheitsrelevante Maßnahmen eingeleitet werden.

## Patentansprüche

1. Verfahren zum Betreiben eines elektrischen Traktionsantriebssystems (10), das einen Elektromotor (70), der als Drehstrommaschine ausgebildet ist, und eine Batterie (110) mit mehreren Batteriesträngen (120) umfasst, in denen jeweils mehrere Batteriemodule (130, 140) angeordnet sind, die jeweils bezüglich den Ausgangsterminals eines jeweiligen Batteriestrangs positiver Polung oder negativer Polung selektiv zugeschaltet oder in dem jeweiligen Batteriestrang überbrückt werden können, sodass jeder Batteriestrang (120) eine einstellbare Ausgangsspannung liefert, wobei die Batteriemodule (130, 140) im Betrieb auf eine ordnungsgemäße Funktion hin überwacht werden, und wenn ein technischer Fehler zumindest eines zugeschalteten Batteriemoduls (130, 140) detektiert wird, das zumindest eine Batteriemodul (130, 140) überbrückt wird, und das Traktionsantriebssystem in einen Übergangszustand überführt wird, in dem der Elektromotor (70) von den verbleibenden zugeschalteten Batteriemodulen (130, 140) der Batteriestränge (120) weiter versorgt wird, **dadurch gekennzeichnet, dass** in diesem Übergangszustand die drehmomentbildende Stromkomponente des Ständerstromes des Elektromotors (70) mittels einer feldorientierten Regelung unverzüglich auf null eingeregelt wird, so dass der Elektromotor (70) kein Drehmoment erzeugt.

2. Verfahren nach Anspruch 1, wobei nachdem das Traktionsantriebssystem (10) in den drehmomentfreien Zustand überführt wurde, eine Batteriediagnose durchgeführt wird, anhand der entschieden wird, ob nach Beendigung des Übergangszustands ein Betrieb des Traktionsantriebssystems (10) mittels der Batterie (110) mit zumindest einem überbrückten defekten Batteriemodul (130, 140) weiter aufrechterhalten werden kann und/oder weitere sicherheitsrelevante Maßnahmen eingeleitet werden.

3. Verfahren nach Anspruch 2, wobei wenn der Betrieb des Traktionsantriebssystems (10) mittels der Batterie (110) mit zumindest einem überbrückten defekten Batteriemodul (130, 140) weiter aufrechterhalten wird, dazu das Traktionsantriebssystem (10) in einen Betriebszustand überführt wird, in dem der Elektromotor (70) mit einer um den Spannungswert einer dem überbrückten defekten Batteriemodul (130, 140) entsprechenden Batteriemodulspannung reduzierten Batteriestrangspannung (USB) gespeist wird.

4. Verfahren nach Anspruch 3, wobei wenn der Betrieb des Traktionsantriebssystems (10) mittels der Batterie (110) mit zumindest einem überbrückten defekten Batteriemodul (130, 140) weiter aufrechterhalten wird, dazu in dem Batteriestrang (120) des überbrücken defekten Batteriemoduls (130, 140) derart viele weitere Batteriemodule (130, 140) als Ersatz des zumindest einen überbrückten defekten Batteriemoduls (130, 140) zu dem Batteriestrang zugeschaltet werden, dass der Elektromotor (70) mit einer weniger reduzierten oder unverändert aufrechterhaltenen Batteriestrangspannung (UB) weiter versorgt werden kann.

5. Verfahren nach Anspruch 3 oder 4, wobei wenn ein weiteres Batteriemodul (130, 140) ausfällt, das Verfahren entsprechend wiederholt wird, wobei basierend auf einen weiteren durchzuführenden Batteriediagnoseschritt entschieden wird, ob das weitere Batteriemodul (130, 140) überbrückt wird und das Traktionsantriebssystem (10) damit weiter betrieben werde kann oder nicht.

6. Vorrichtung (200) zur Steuerung eines elektrischen Traktionsantriebssystems (10), das einen Elektromotor (70) und eine Batterie (110) mit mehreren Batteriesträngen (120) umfasst, in denen jeweils mehrere Batteriemodule (130, 140) angeordnet sind, die jeweils bezüglich des Ausgangsterminals eines jeweiligen Batteriestrangs (120) mit positiver Polung oder negativer Polung selektiv zugeschaltet oder in dem jeweiligen Batteriestrang (120) überbrückt werden können, sodass jeder Batteriestrang (120) eine einstellbare Ausgangsspannung liefert, wobei die Vorrichtung (200) dazu ausgebildet ist, die Batteriemodule (130, 140) im Betrieb auf eine ordnungsgemäße Funktion hin zu überwachen, und wenn bei der Überwachung ein technischer Fehler zumindest eines Batteriemoduls (130, 140) detektiert wird, das Traktionsantriebssystem (10) so anzusteuern, dass das Traktionsantriebssystem (10) in einen Übergangszustand überführt wird, in dem der Elektromotor (70), während das zumindest eine als fehlerhaft detektierte Batteriemodul (130, 140) sich in einem überbrückt Zustand befindet, von den zugeschalteten Batteriemodulen (130, 140) des Batteriestrangs (120) weiter versorgt wird, **dadurch gekennzeichnet, dass** der Elektromotor (70) derart gesteuert wird, dass der Wert einer drehmomentbildenden Komponente eines Ständerstromes unverzüglich auf null eingeregelt wird, so dass der Elektromotor kein Drehmoment erzeugt.

7. Vorrichtung (200) nach Anspruch 6, wobei die Vorrichtung eine Batteriediagnoseeinheit aufweist, sodass die Vorrichtung dazu ausgebildet ist, die Batteriediagnose gemäß Anspruch 2 durchzuführen.

8. Batteriesystem mit einer Batterie (110), die mehrere Batteriestränge (120) umfasst, in denen jeweils mehrere Batteriemodule (130, 140) angeordnet sind, die jeweils mit bezüglich Ausgangsterminals eines jeweiligen Batteriestrangs (120) positiver Polung oder negativer Polung selektiv zugeschaltet oder in dem Batteriestrang überbrückt werden können, und mit einer Vorrichtung (200) nach einem der Ansprüche 6 oder 7.

9. Fahrzeug, das einen Elektromotor (70) und das Batteriesystem nach Anspruch 8 oder die Vorrichtung (200) nach einem der Ansprüche 6 oder 7 aufweist, wobei das Batteriesystem beziehungsweise die Vorrichtung (200) in einem Antriebsstrang des Fahrzeugs angeordnet sind.

## Claims

1. Method for operating an electric traction drive system (10) that comprises an electric motor (70) that is designed as a three-phase current machine and a battery (110) having a plurality of battery strings (120) in each of which a plurality of battery modules (130, 140) are arranged, which battery modules are each able to be selectively connected with respect to the output terminals of a respective battery string of positive polarity or negative polarity or bypassed in the respective battery string, such that each battery string (120) delivers a settable output voltage, wherein the battery modules (130, 140) are monitored for correct operation during operation, and if a technical fault with at least one connected battery module (130, 140) is detected, the at least one battery module (130, 140) is bypassed and the traction drive system is put into a transition state in which the electric motor (70) continues to be supplied by the remaining connected battery modules (130, 140) of the battery strings (120), **characterized in that**, in this transition state, the torque-forming current component of the stator current of the electric motor (70) is immediately set to zero by way of field-oriented control such that the electric motor (70) does not generate any torque.

2. Method according to Claim 1, wherein, after the traction drive system (10) has been put into the torque-free state, a battery diagnosis is performed, on the basis of which a decision is made as to whether operation of the traction drive system (10) by way of the battery (110) with at least one bypassed defective battery module (130, 140) is still able to be maintained after the transition state has ended and/or further safety-relevant measures are initiated.

3. Method according to Claim 2, wherein, when operation of the traction drive system (10) by way of the battery (110) with at least one bypassed defective battery module (130, 140) is still maintained, the traction drive system (10) is for this purpose put into an operating state in which the electric motor (70) is supplied with a battery string voltage (USB) reduced by the voltage value of a battery module voltage corresponding to the bypassed defective battery module (130, 140).

4. Method according to Claim 3, wherein, when operation of the traction drive system (10) by way of the battery (110) with at least one bypassed defective battery module (130, 140) is still maintained, many further battery modules (130, 140) are for this purpose connected to the battery string as a replacement for the at least one bypassed defective battery module (130, 140) in the battery string (120) of the bypassed defective battery module (130, 140), such that the electric motor (70) is able to continue to be supplied with a battery string voltage (UB) that is less reduced or kept unchanged.

5. Method according to Claim 3 or 4, wherein, when a further battery module (130, 140) fails, the method is accordingly repeated, wherein a decision is made, based on a further battery diagnosis step to be performed, as to whether the further battery module (130, 140) is bypassed and the traction drive system (10) is or is not thus still able to be operated.

6. Device (200) for controlling an electric traction drive system (10) that comprises an electric motor (70) and a battery (110) having a plurality of battery strings (120) in each of which a plurality of battery modules (130, 140) are arranged, which battery modules are each able to be selectively connected with respect to the output terminal of a respective battery string (120) with positive polarity or negative polarity or bypassed in the respective battery string (120), such that each battery string (120) delivers a settable output voltage, wherein the device (200) is designed to monitor the battery modules (130, 140) for correct operation during operation, and if a technical fault with at least one battery module (130, 140) is detected during the monitoring, to actuate the traction drive system (10) such that the traction drive system (10) is put into a transition state in which the electric motor (70) continues to be supplied by the connected battery modules (130, 140) of the battery string (120) while the at least one battery module (130, 140) detected as being faulty is in a bypassed state, **characterized in that** the electric motor (70) is controlled such that the value of a torque-forming component of a stator current is immediately set to zero such that the electric motor does not generate any torque.

7. Device (200) according to Claim 6, wherein the device has a battery diagnosis unit, such that the device is designed to perform the battery diagnosis according to Claim 2.

8. Battery system having a battery (110) that comprises a plurality of battery strings (120) in each of which a plurality of battery modules (130, 140) are arranged, which battery modules are each able to be selectively connected with respect to output terminals of a respective battery string (120) of positive polarity or negative polarity or bypassed in the battery string, and having a device (200) according to either of Claims 6 and 7.

9. Vehicle having an electric motor (70) and the battery system according to Claim 8 or the device (200) according to either of Claims 6 and 7, wherein the battery system or the device (200) are arranged in a drivetrain of the vehicle.

## Revendications

1. Procédé de fonctionnement d'un système de traction électrique (10) comprenant un moteur électrique (70), qui est conçu sous la forme d'une machine triphasée, et une batterie (110) pourvue de plusieurs chaînes de batteries (120), dans chacune desquelles sont disposés plusieurs modules de batterie (130, 140) qui peuvent être connectés chacun de manière sélective au pôle positif ou au pôle négatif par rapport aux bornes de sortie d'une chaîne de batteries respective ou qui peuvent être pontés dans la chaîne de batteries respective de manière à ce que chaque chaîne de batteries (120) délivre une tension de sortie réglable, dans lequel les modules de batterie (130, 140) sont contrôlés pendant le fonctionnement pour vérifier qu'ils fonctionnent correctement, et si un incident technique d'au moins un module de batterie (130, 140) connecté est détecté, ledit au moins un module de batterie (130, 140) est ponté, et le système de traction est mis dans un état transitoire dans lequel le moteur électrique (70) continue d'être alimenté par les modules de batterie (130, 140) connectés restants des chaînes de batteries (120), **caractérisé en ce que**, dans ledit état transitoire, la composante de courant génératrice de couple du courant statorique du moteur électrique (70) est immédiatement réglée à zéro au moyen d'un système de commande orienté champ, de sorte que le moteur électrique (70) ne génère aucun couple.

2. Procédé selon la revendication 1, dans lequel, après que le système de traction (10) a été mis dans l'état sans couple, un diagnostic de la batterie est effectué, sur la base duquel il est décidé si, après la fin de l'état transitoire, un fonctionnement du système de traction (10) au moyen de la batterie (110) avec au moins un module de batterie (130, 140) défectueux ponté peut être maintenu et/ou si d'autres mesures relevant de la sécurité peuvent être prises.

3. Procédé selon la revendication 2, dans lequel, si le fonctionnement du système de traction (10) continue d'être maintenu au moyen de la batterie (110) avec au moins un module de batterie (130, 140) défectueux ponté, le système de traction (10) est à cet effet mis dans un état de fonctionnement dans lequel le moteur électrique (70) est alimenté avec une tension de chaîne de batteries (USB) réduite de la valeur de tension d'une tension de module de batterie correspondant au module de batterie (130, 140) défectueux ponté.

4. Procédé selon la revendication 3, dans lequel, si le fonctionnement du système de traction (10) continue d'être maintenu au moyen de la batterie (110) avec au moins un module de batterie (130, 140) défectueux ponté, de nombreux autres modules de batterie (130, 140) sont connectés à la chaîne de batteries dans la chaîne de batteries (120) du module de batterie (130, 140) défectueux ponté en remplacement dudit au moins un module de batterie (130, 140) défectueux ponté de manière à ce que le moteur électrique (70) puisse continuer d'être alimenté avec une tension de chaîne de batteries (UB) moins réduite ou inchangée.

5. Procédé selon la revendication 3 ou 4, dans lequel, si un autre module de batterie (130, 140) tombe en panne, le procédé est répété de manière correspondante, dans lequel il est décidé, sur la base d'une autre étape de diagnostic de la batterie à effectuer, si l'autre module de batterie (130, 140) est ponté et si le système de traction (10) peut ou non continuer de fonctionner avec celui-ci.

6. Dispositif (200) pour commander un système de traction électrique (10) comprenant un moteur électrique (70) et une batterie (110) pourvue de plusieurs chaînes de batteries (120), dans chacune desquelles sont disposés plusieurs modules de batterie (130, 140) qui peuvent être connectés chacun de manière sélective au pôle positif ou au pôle négatif par rapport aux bornes de sortie d'une chaîne de batteries (120) respective ou qui peuvent être pontés dans la chaîne de batteries (120) respective de manière à ce que chaque chaîne de batteries (120) délivre une tension de sortie réglable, dans lequel le dispositif (200) est conçu pour contrôler les modules de batterie (130, 140) pendant le fonctionnement pour vérifier qu'ils fonctionnent correctement, et si un incident technique d'au moins un module de batterie (130, 140) est détecté pendant le contrôle, pour commander le système de traction (10) de manière à ce que le système de traction (10) soit mis dans un état transitoire dans lequel le moteur électrique (70) continue d'être alimenté par les modules de batterie (130, 140) connectés de la chaîne de batteries (120), pendant que ledit au moins un module de batterie (130, 140) ayant été détecté comme étant défectueux est dans un état ponté, **caractérisé en ce que** le moteur électrique (70) est commandé de manière à ce que la valeur d'une composante génératrice de couple d'un courant statorique soit immédiatement réglée à zéro, de sorte que le moteur électrique ne génère aucun couple.

7. Dispositif (200) selon la revendication 6, dans lequel le dispositif comprend une unité de diagnostic de batterie, de sorte que le dispositif est conçu pour réaliser le diagnostic de batterie selon la revendication 2.

8. Système de batterie comportant une batterie (110) qui comprend plusieurs chaînes de batteries (120), dans chacune desquelles sont disposés plusieurs modules de batterie (130, 140) qui peuvent être connectées chacun de manière sélective au pôle positif ou au pôle négatif par rapport à des bornes de sortie d'une chaîne de batteries (120) respective ou qui peuvent être pontées dans la chaîne de batteries, et comportant un dispositif (200) selon l'une des revendications 6 ou 7.

9. Véhicule comportant un moteur électrique (70) et le système de batterie selon la revendication 8 ou le dispositif (200) selon l'une des revendications 6 ou 7, dans lequel le système ou le dispositif de batterie (200) est disposé dans une chaîne cinématique du véhicule.
